(19) Europäisches Patentamt
European Patent Office
Office européen des brevets

(11) Veröffentlichungsnummer: **0 158 052**
**B1**

(12) **EUROPÄISCHE PATENTSCHRIFT**

(45) Veröffentlichungstag der Patentschrift: **22.07.87**

(51) Int. Cl.⁴: **C 08 G 63/68**, C 08 G 63/66

(21) Anmeldenummer: **85101748.3**

(22) Anmeldetag: **18.02.85**

(54) **Verfahren zur Herstellung von Polyestern verbesserter Anfärbbarkeit.**

(30) Priorität: **01.03.84 DE 3407562**

(43) Veröffentlichungstag der Anmeldung: **16.10.85 Patentblatt 85/42**

(45) Bekanntmachung des Hinweises auf die Patenterteilung: **22.07.87 Patentblatt 87/30**

(84) Benannte Vertragsstaaten: **FR GB IT NL**

(56) Entgegenhaltungen:
**FR-A-2 052 689**
**FR-A-2 280 632**
**FR-A-2 318 184**

(73) Patentinhaber: **Th. Goldschmidt AG, Goldschmidtstrasse 100 Postfach 101461, D-4300 Essen 1 (DE)**

(72) Erfinder: **Fock, Jürgen, Dr., Mörsenbroicher Weg 114, D-4000 Düsseldorf 30 (DE)**

**EP 0 158 052 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft ein Verfahren zur Herstellung von Polyestern verbesserter Anfärbbarkeit durch Umsetzung von Dicarbonsäuren oder deren reaktiven Derivaten mit einem Gemisch von Diolen, bestehend aus einer überwiegenden Menge eines Alkylenglykols und einer demgegenüber kleineren Menge eines Polyoxyalkylenethers mit zwei freien Hydroxylgruppen am Startalkohol.

Polyester, insbesondere solche aus Terephthalsäure oder deren Dimethylester und Alkylenglykolen mit 2 bis 10 Kohlenstoffatomen, eignen sich hervorragend zur Herstellung von Fasern. Diese Polyester sind relativ unlösliche, chemisch inaktive, hydrophobe Materialien. Diese Eigenschaften bedingen jedoch Schwierigkeiten bei der Einfärbung von Fasern oder daraus hergestellten textilen Produkten. Adsorption und Penetration der Farbstoffe in die Faser sind ferner dadurch erschwert, daß die Moleküle im gereckten Zustand längs der Faserachse ausgerichtet sind und in dichter Packung vorliegen. Um diesen Schwierigkeiten bei der Anfärbung zu begegnen, färbt man entweder in Gegenwart von Trägersubstanzen (Carrier) bei etwa 95°C oder nach dem Hochtemperaturverfahren bei 110 bis 130°C in Druckfärbeapparaturen. Die notwendige Wiederentfernung der Trägersubstanzen nach der Färbung führt jedoch zu einer unerwünschten Belastung der Umwelt, die thermische Beanspruchung zu einer möglichen Minderung der mechanischen Eigenschaften und der thermischen Stabilität der Fasern. Häufig konnte auch nicht eine genügend gleichmäßige Färbung erreicht werden.

Aus der US-A-3 684 768 ist ein faserbildender, mit Dispersionsfarben anfärbbarer Polyester aus einem Dialkylenglykol und Terephthalsäure bekannt, welcher als Modifizierungsmittel, bezogen auf wiederkehrende Polyestereinheit, 0,25 bis 10 Mol-% eines Comonomeren der Formel

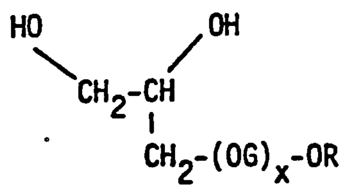

enthält, wobei G der Rest $-(CH_2)_2-$ oder $-(CH_2)_3-$ oder ein Gemisch hiervon, R eine Alkylgruppe mit im Durchschnitt 8 bis 20 Kohlenstoffatomen ist und x im Durchschnitt einen Wert von 8 bis 20 hat. Die so modifizierten Polyester zeigen z. B. in Faserform erhohte thermische Stabilität und verbesserte Anfärbbarkeit. Jedoch war auch diese Verbesserung der Anfärbbarkeit noch nicht für die Praxis ausreichend, so daß ein Bedürfnis nach einem geeigneten, die Anfärbbarkeit verbessernden Modifizierungsmittel weiter bestand.

In der FR-A-2 052 689 sind Metallsalze aromatischer Sulfonate beschrieben, welche folgende Formel aufweisen:

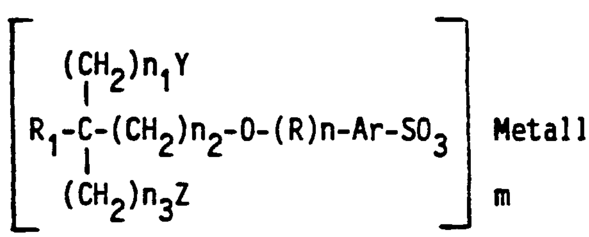

In dieser Formel bedeutet $R_1$ ein Wasserstoffatom oder einen Alkylrest mit 1 bis 6 Kohlenstoffatomen. Y und Z können die Bedeutung einer Hydroxylgruppe haben. $n_1$, $n_2$ und $n_3$ haben einen Wert von 0 bis 6, wobei die Summe von $n_1 + n_2 + n_3 \geq 2$ ist. R ist ein 2-wertiger Kohlenwasserstoffrest, Ar ist ein 2-wertiger aromatischer Kohlenwasserstoffrest. Diese Verbindungen können als anteilige Diolkomponente bei der Herstellung von linearen Polyestern verwendet werden und verbessern die Anfärbbarkeit der Fasern. Die Verbesserung der Anfärbbarkeit erfolgt jedoch noch nicht in ausreichendem Maße.

Aus der FR-A-2 280 632 sind Dihydroxisulfonate der folgenden Formel beschrieben:

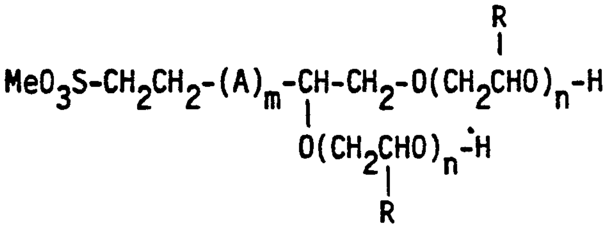

In dieser Formel bedeutet A einen Alkylenrest mit 1 bis 6 Kohlenstoffatomen. R ist ein Wasserstoffrest, ein Alkylrest mit 1 bis 4 Kohlenstoffatomen oder ein Phenylrest. m ist 0 oder 1. n ist eine Zahl von 1 bis 30. Auch diese Verbindungen können als Diolkomponente bei der Herstellung linearer Polyester mitverwendet werden und verbessern die Anfärbbarkeit. Die Oxyalkyleneinheiten bilden aber durch den Einbau einen Bestandteil des linearen Polyestergerüsts und beeinflussen die Eigenschaften der Polyester. Es wird insbesondere die thermische Stabilität der modifizierten Polyester verringert, da bei oxydativem Angriff die Kette des linearen Polyesters aufgespalten wird.

Der Erfindung liegt somit die Aufgabe zugrunde, ein Modifizierungsmittel für Polyester zu finden, das die mechanische und thermische Stabilität der Polyester nicht beeinträchtigt und die Anfärbbarkeit von Gegenständen aus Polyestern, insbesondere Polyesterfasern, wesentlich verbessert.

Die Lösung dieser Aufgabe gelingt überraschenderweise dadurch, daß man bei der Herstellung des Polyesters durch Umsetzung von Dicarbonsäuren oder deren reaktiven Derivaten mit einem Gemisch von Diolen, bestehend aus einer überwiegenden Menge eines Alkylenglykols und einer demgegenüber kleineren Menge eines Polyoxyalkylenethers mit zwei freien Hydroxylgruppen am Startalkohol als Polyoxyalkylenether einen solchen der Formel

$R^1CH_2O\text{-}(C_2H_4O\text{-})_n(C_3H_6O\text{-})_mCH_2CHR^3CH_2\text{-}SO_3X$ I

wobei

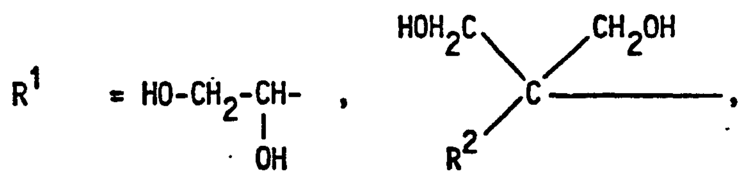

$R^2 = CH_3\text{-}, C_2H_5\text{-}, C_3H_7\text{-},$

$R^3 = $ H- oder $CH_3\text{-},$

X = H-, Alkali- oder Ammoniumion,

n = 0 bis 100,

m = 0 bis 50 und

$n + m \geq 1$

ist, in Mengen von 0,1 bis 20 Gew.-%, bezogen auf Polyester, verwendet.

Besonders bevorzugt ist ein Zusatz von 1 bis 8 Gew.-%, bezogen auf Polyester.

Die beim erfindungsgemäßen Verfahren zu verwendenden Produkte können durch radikalische Addition von $HSO_3X$ an Verbindungen der Formel

$R^1CH_2O\text{-}(C_2H_4O\text{-})_n(C_3H_6O\text{-})_mCH_2CHR^3{=}CH_2$ II

in an sich bekannter Weise in Gegenwart von Katalysatoren und gegebenenfalls bei erhöhter Temperatur hergestellt werden. Die Additionsreaktion ist z. B. in Houben-Weyl "Methoden der organischen Chemie", Band IX, Seite 380, beschrieben. Bevorzugt verwendet man Ammoniumhydrogensulfit. Die radikalische Addition verläuft mit hohen Ausbeuten in Gegenwart von Luftsauerstoff bei gegebenenfalls mäßig erhöhten Temperaturen von bis zu 40°C. Die Additionsreaktion läßt sich über die Abnahme der Konzentration an Doppelbindungen durch die Jodzahl sowie mittels der Elementarschwefelbestimmung nach Carius verfolgen. Anstelle des Ammoniumhydrogensulfits kann auch schwefelige Säure, ein saures Alkalisalz der schwefeligen Säure, insbesondere Natriumhydrogensulfit, verwendet werden. Es sind auch andere Metallhydrogensulfite außer den Alkalisalzen brauchbar, jedoch werden diese wegen ihrer geringeren Löslichkeit im allgemeinen nicht verwendet.

Die Herstellung der Allyl- oder Methallylgruppen aufweisenden Ausgangsverbindungen geschieht entsprechend der Lehre der DE-A-30 25 807. Ausgangsverbindungen sind Glycerin, Trimethylolethan,

Trimethylolpropan oder Trimethylolbutan. Jeweils zwei Hydroxylgruppen dieser Verbindungen werden zunächst durch sauer katalysierte Umsetzung mit einem Aldehyd, wie z. B. Formaldehyd, Acetaldehyd, Propionaldehyd, Butyraldehyd, oder einem Keton, wie z. B. Aceton, Methylethylketon, Methyl-iso-butylketon, durch längeres Verweilen bei Raumtemperatur in Gegenwart eines Trockenmittels in das entsprechende Acetal oder Ketal überführt, so daß nur eine reaktionsfähige Hydroxylgruppe erhalten bleibt. An diese Hydroxylgruppe wird in Gegenwart eines basischen Katalysators, wie Kalium- oder Natriummethylat, unter einem Druck von 1 bis 6 bar und bei Temperaturen von 90 bis 120°C unter Stickstoff Ethylenoxid und/oder Propylenoxid in solchen Mengen angelagert, daß die Bedingungen für die Indices n und m bzw. für die Summe n + m erfüllt werden. Der erhaltene Polyoxyalkylenether wird unter Stickstoff mit einem Alkalimetall, wie Natrium oder Kalium oder deren Alkoholate, wie Natrium- bzw. Kaliummethylat, bei 80 bis 120°C unter Entfernung des $H_2$-Gases bzw. des Methanols umgesetzt, wobei der entsprechende Alkalipolyether entsteht. Das Alkalisalz wird sodann mit Allyl- bzw. Methallylhalogenid bei 70 bis 100°C umgesetzt, das entstehende Alkalihalogenid durch Filtration entfernt und schließlich das Acetal bzw. Ketal unter Einwirkung einer Säure, wie Salzsäure, Schwefelsäure oder Phosphorsäure, bei ca. 80°C gespalten. Damit erhält man die für das erfindungsgemäße Verfahren benotigte Ausgangsverbindung.

Das Herstellverfahren der beim erfindungsgemäßen Verfahren eingesetzten Modifizierungsmittel läßt sich durch die folgenden Reaktionsschemata verdeutlichen:

Stufe 1

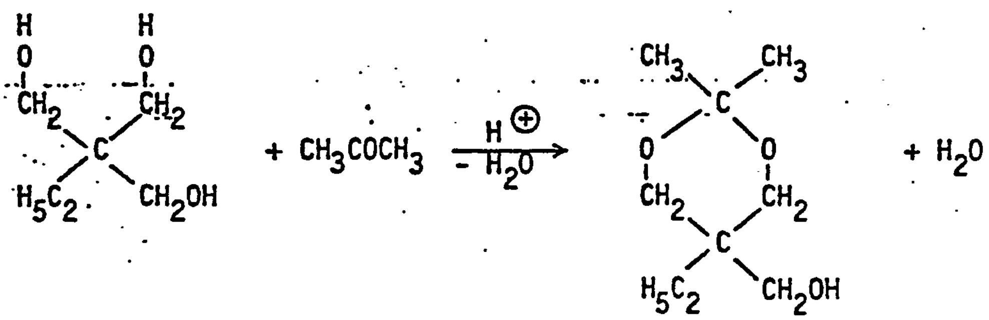


Stufe 2

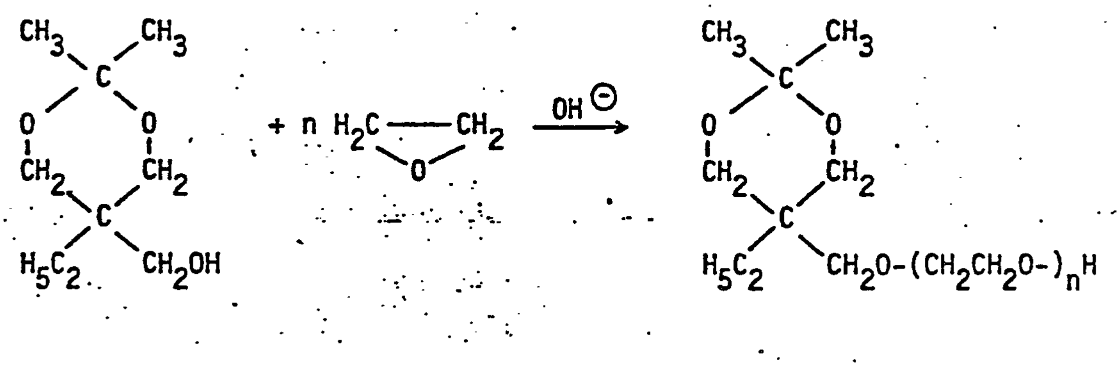

Stufe 3

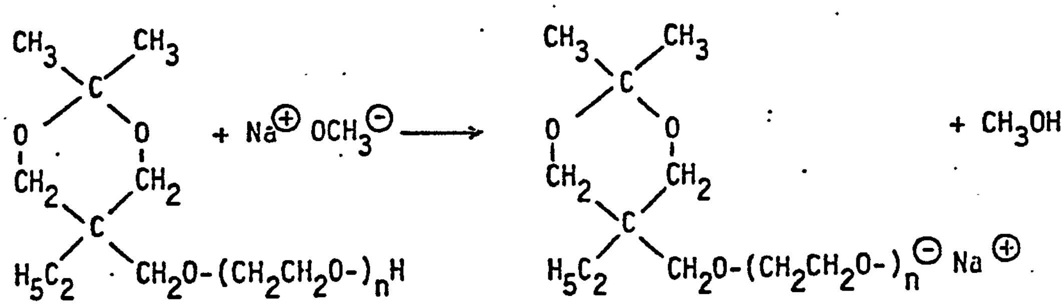

Stufe 4

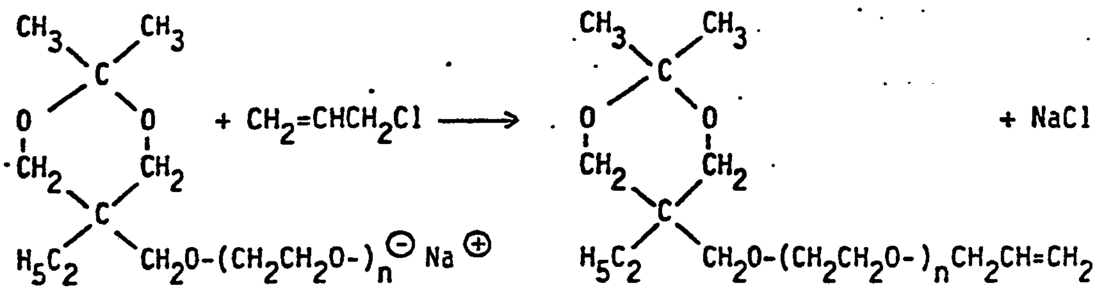

Stufe 5

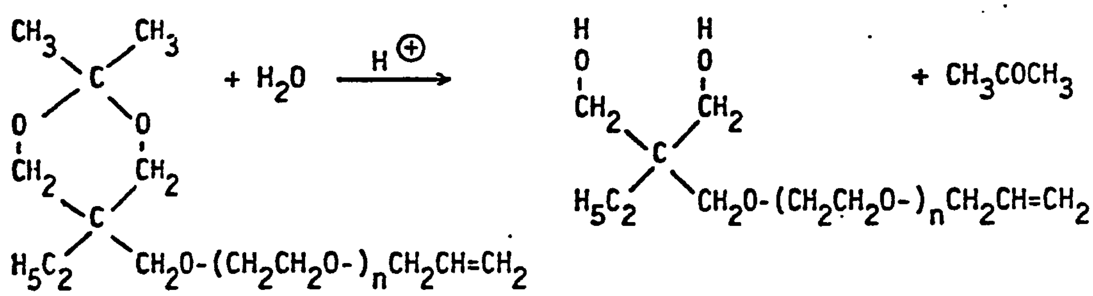

Stufe 6

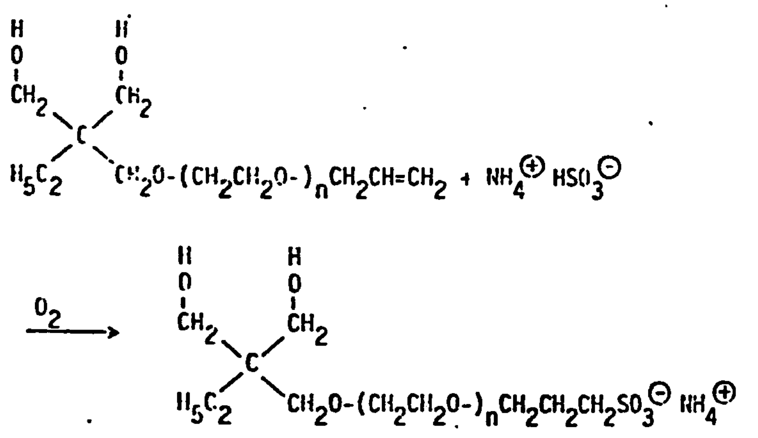


Die Herstellung des modifizierten Polyesters geschieht analog dem Stand der Technik. So kann man die Dicarbonsäure, das Alkylenglykol und das erfindungsgemäß einzusetzende Modifizierungsmittel gleichzeitig und gemeinsam verestern. Das Reaktionswasser wird abgeführt. Es ist auch möglich, in einer ersten Stufe die Veresterung mit der Gesamtmenge des Modifizierungsmittels durchzuführen und erst nach dieser Vorreaktion das Alkylenglykol zuzusetzen. Der modifizierte Polyester kann aus der Schmelze oder aus seiner Lösung in üblicher Weise verarbeitet werden.

Der erfindungsgemäß hergestellte Polyester verbindet hervorragende Thermostabilität mit wesentlich verbesserter Färbbarkeit. Dies wird in dem folgenden Beispiel noch näher gezeigt.

A) Herstellung eines Polyether-1.3-diols (nicht erfindungsgemäß)

In 174 g (ca. 1 Mol) 2.2-Dimethyl-5-ethyl-hydroxymethyl-1.3-dioxan werden bei 80°C 7 g Kaliummethylat in einem Reaktor mit einem zwangsfördernden Umlaufsystem in Lösung gebracht. Nach sorgfältiger Spülung mit Reinstickstoff wird der Reaktor auf 110°C geheizt und eine Mischung von 880 g (ca. 20 Mol) Ethylenoxid so schnell zugegeben, daß die Reaktorinnentemperatur einen Wert von 120°C und der Druck einen Wert von 3 bar nicht überschreiten. Nach vollständiger Einleitung des Alkylenoxids wird die Temperatur so lange auf 120°C gehalten, bis ein gleichbleibender Druck das Ende der Nachreaktion anzeigt; danach wird bei 80 bis 90°C die Entfernung von Restmonomeren unter Vakuum vorgenommen. Nach Beendigung der Reaktion werden 50 ml Wasser bei 80°C eingerührt. Anschließend werden 30 g 30 %ige Phosphorsäure zugegeben; es wird 0,25 h gerührt und dann mit $NaH_2PO_4$ auf einen pH-Wert von eingestellt. Danach wird das Wasser bei 80 bis 90°C in einem Vakuum von 1330 Pa (10 Torr) abdestilliert und das Produkt mit 10 g eines Filterhilfsmittels auf Silicatbasis abfiltriert.

Die Hydroxylzahl des erhaltenen Produktes beträgt 59,7, was einem Molekulargewicht von ca. 940 entspricht.

Zu 940 g (ca. 1 Mol) des erhaltenen Polyethers werden nach nochmaliger sorgfältiger Trocknung unter einem Stickstoffstrom bei 120°C 24,2 g (ca. 1,05 Mol) Natriummetall in kleinen Portionen zugegeben. Nach Beendigung dieser Zugabe wird für weitere 2 h erhitzt, anschließend wird auf ca. 50°C abgekühlt und 80,3 g (ca. 1,05 Mol) Allylchlorid zugetropft und danach wiederum auf 120°C aufgeheizt. Das ausgeschiedene Kochsalz wird nach Zugabe eines Filterhilfsmittels abfiltriert.

Aus der Jodzahlbestimmung nach Hanus wird ein Umsatz bei der Kondensationsreaktion von 98,5 ermittelt; die Hydroxylzahl beträgt 1,2.

Die Spaltung des Ketalringes des erhaltenen Polyethers erfolgt, indem dieser im Gewichtsverhältnis 1: 1: 1 mit 1 n Salzsäure und Ethanol vermischt und für 8 h unter Rückfluß erhitzt wird. Nach Beendigung der Spaltungsreaktion wird das noch heiße Reaktionsgemisch mit 50 %iger waßriger Natronlauge neutralisiert. Anschließend werden alle flüchtigen Bestandteile im Bereich von 70 bis 80°C bei einem Vakuum von 1330 Pa (10 Torr) abdestilliert. Das anfallende Kochsalz läßt sich wiederum unter Verwendung eines Filterhilfsmittels in der Wärme vollständig abscheiden.

Die Hydroxylzahl des erhaltenen Polyether-1.3-diols beträgt 112.

B) Herstellung eines sulfonierten Polyether-1.3-diols

940 g (ca. 1 Mol) des in A) erhaltenen Produktes werden in 1000 ml einer Mischung von 5 Gew.-Teilen Wasser und 1 Gew.-Teil Ethanol gelöst. Unter starkem Rühren und unter Luftzutritt werden innerhalb von 2 h 149 g (ca. 1,5 Mol) Ammoniumhydrogensulfit, gelöst in 300 ml Wasser, sowie 50 ml 25 %ige wäßrige Ammoniaklösung zugegeben. Nach einer Nachreaktionszeit von nochmals 2 h werden Wasser und Ethanol bei 60 bis 80°C und einem Vakuum von 1330 Pa (10 Torr) entfernt und das ausgefallene, überschussige Ammoniumhydrogensulfit mit Hilfe eines Filterhilfsmittels abfiltriert.

Die aus der Jodzahl des erhaltenen Produktes berechnete Reaktionsausbeute beträgt 90,9 %; aus der Bestimmung des Gesamtschwefels nach Carius ergibt sich eine Reaktionsausbeute von 92,5 %. Die Hydroxylzahl, die nach Überführung des Ammoniumsulfonats in das entsprechende Natriumsulfonat erhalten wurde, beträgt 102.

Gemäß Abschnitt A) und B) werden verschieden sulfonierte Polyether-1.3-diole mit unterschiedlichem

Molekulargewicht auf Basis von reinem Ethylenoxid und Propylenoxid hergestellt. In der nachfolgenden Tabelle 1 sind die Daten der erhaltenen Polyether-1.3-diole vor und nach der Sulfonierung angegeben.

**Tabelle 1**

| Polyether Nr. | Verhältnis Ethylenoxid/Propylenoxid (Gew.-%/Gew.-%) | Molekulargewicht vor der Sulfonierung | Umsatz bei der Sulfonierung aus Jodzahl | Umsatz bei der Sulfonierung aus Schwefelgehalt | Hydroxylzahl nach der Sulfonierung |
|---|---|---|---|---|---|
| 1 | 100/0 | 490 | 93,9 | 95,0 | 172 |
| 2 | 100/0 | 780 | 92,0 | 93,2 | 119 |
| 3 | 100/0 | 940 | 90,9 | 92,5 | 102 |
| 4 | 100/0 | 1350 | 89,0 | 90,0 | 74 |
| 5 | 100/0 | 1890 | 86,9 | 89,5 | 51 |
| 6 | 30/70 | 990 | 79,5 | 81,7 | 95 |
| 7 | 70/30 | 1040 | 86,3 | 87,0 | 92 |

C) Herstellung von Polyesterfasern unter Verwendung der sulfonierten und zum Vergleich der nicht sulfonierten Polyether-1.3-diole

Zur Herstellung der Polyester wird das in "Methoden der organischen Chemie", Houben-Weyl, Band 14/2, Seite 20, beschriebene Verfahren herangezogen. Hierzu werden Terephthalsäuredimethylester und ein Diolgemisch aus Ethylenglykol und dem jeweiligen sulfonierten Poly-ether-1.3-diol (in Form des Natriumsalzes) bzw. nicht sulfonierten Polyether-1.3-diol nach Zugabe von jeweils 10 Gew.-%, bezogen auf die Ausgangskomponenten einer 0,2 %igen Natriummethylatlösung in Methanol, miteinander zur Umsetzung gebracht. Der molare Überschuß des Diolgemisches gegenüber dem Diester beträgt in jedem Fall das 1,6fache. Die Polyether-1.3-diole werden in einer solchen Menge eingesetzt, daß schrittweise 0 bis 8 Gew.-% der theoretisch einzusetzenden Menge an Ethylenglykol substituiert werden. Die Tabelle 2 zeigt das Verhältnis von Ethylenglykol zu sulfoniertem bzw. nicht sulfoniertem Polyether-1.3-diol für die verschiedenen Kondensationsversuche an.

D) Vergleichende färbetechnische Prüfung der erhaltenen Fasern

Jeweils 1 g der getrockneten Fasern wird in 40 ml einer Farbstofflösung gebracht, die durch Abmischen von 0,5 g eines blauen Dispersionsfarbstoffes auf Basis einer Monoazoverbindung (Palanil ®) und 1 g eines handelsüblichen Tensids in 250 ml deionisiertem Wasser hergestellt wird. Die Gefäße mit den Fasern und der Farbstofflösung werden für 2 h bei einer Temperatur von 95°C geschüttelt. Nach Abkühlung in einem Eisbad werden 10 ml der Lösung mit 90 ml Dimethylformamid vermischt. Durch Vergleich der optischen Dichte dieser Lösung mit der Dichte einer Farbstofflösung, die nicht mit Fasern in Berührung gekommen ist, kann die prozentuale Farbstoffaufnahme im Fasermaterial ermittelt werden.

Das Diagramm 1 zeigt die Aufnahme des Farbstoffes in Abhängigkeit vom Molekulargewicht des sulfonierten und des nicht sulfonierten Polyethylenoxid-1.3-diols im Polyester bei einer konstanten Konzentration des 1.3-Diols von 4 Gew.-%, bezogen auf das Polykondensat.

—o— ist die Kurve für das sulfonierte Polyethylenoxid-1.3-diol.

-+- ist die entsprechende Kurve für das nicht sulfonierte Polyethylenoxid-1.3-diol.

—□— ist die Kurve für ein sulfoniertes Polyethylenoxid-Polypropylenoxid-1.3-diol (Ethylenoxid/Propylenoxidverhältnis 30: 70 Gew.-%).

—Δ— ist die Kurve für ein sulfoniertes Polyethylenoxid-Polypropylenoxid-1.3-diol (Ethylenoxid/Propylenoxidverhältnis 70: 30 Gew.-%).

--□-- ist die Kurve für ein nicht sulfoniertes Polyethylenoxid-Polypropylenoxid-1.3-diol (Ethylenoxid/Propylenoxidverhältnis 30: 70 Gew.-%).

--□-- ist die Kurve für ein nicht sulfoniertes Polyethylenoxid-Polypropylenoxid-1.3-diol (Ethylenoxid/Propylenoxidverhältnis 70: 30 Gew.-%).

Das Diagramm 2 zeigt die Aufnahme des Farbstoffes in Abhängigkeit von der Konzentration an 1.3-Diolen mit und ohne Sulfonatgruppe mit einem Molekulargewicht von ca. 1000. Die durch die sulfonierten 1.3-Diole bewirkte Verbesserung der Anfärbbarkeit der Polyesterfaser ist deutlich erkennbar. Es ist ein Optimum der Anfärbbarkeit im Molekulargewichtsbereich von 1000 bis 1500 gegeben. Die erhöhte Aufnahme an Farbstoff ist bereits bei einem Anteil des 1.3-Diols von 2 Gew.-% deutlich ausgeprägt. Ebenfalls merklich, aber vergleichsweise schwächer ist die Wirkung von nicht sulfonierten 1.3-Diolen in den Polyesterfasern ausgeprägt.

**Tabelle 2**

| Versuchs-Nr. | Ethylenglykol (g) | sulfoniertes Polyether-1.3-diol Nr.*/(g) | nicht sulfoniertes Polyether-1.3-diol Nr.*/(g) |
|---|---|---|---|
| 1 | 99,0 | - | - |
| 2 | 96,5 | 1/2,5 | - |
| 3 | 96,5 | - | 1/2,5 |
| 4 | 96,5 | 2/2,5 | - |
| 5 | 96,5 | - | 2/2,5 |
| 6 | 96,5 | 3/2,5 | - |
| 7 | 96,5 | - | 3/2,5 |
| 8 | 96,5 | 4/2,5 | - |
| 9 | 96,5 | - | 4/2,5 |
| 10 | 96,5 | 5/2,5 | - |
| 11 | 96,5 | - | 5/2,5 |
| 12 | 96,5 | 6/2,5 | - |
| 13 | 96,5 | - | 6/2,5 |
| 14 | 96,5 | 7/2,5 | - |
| 15 | 96,5 | - | 7/2,5 |
| 16 | 97,75 | 3/1,25 | - |
| 17 | 97,75 | - | 3/1,25 |
| 18 | 95,3 | 3/3,7 | - |
| 19 | 95,3 | - | 3/3,7 |
| 20 | 94,0 | 3/5,0 | - |
| 21 | 94,0 | - | 3/5,0 |

* Polyether-Nr. aus Tabelle 1

**Patentanspruch**

Verfahren zur Herstellung von Polyestern verbesserter Anfärbbarkeit durch Umsetzung von Dicarbonsäuren oder deren reaktiven Derivaten mit einem Gemisch von Diolen, bestehend aus einer überwiegenden Menge eines Alkylenglykols und einer demgegenüber kleineren Menge eines Polyoxyalkylenethers mit zwei freien Hydroxylgruppen am Startalkohol, dadurch gekennzeichnet, daß als Polyoxyalkylenether ein solcher der Formel

$R^1CH_2O-(C_2H_4O-)_n(C_3H_6O-)_mCH_2CHR^3CH_2-SO_3X$

wobei

$R^1$ = 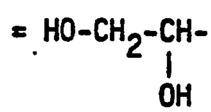 , 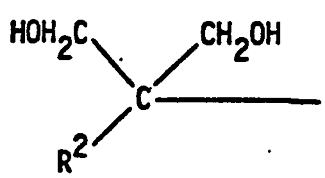 ,

$R^2$ = $CH_3$-, $C_2H_5$-, $C_3H_7$-,
$R^3$ = H- oder $CH_3$-,
X = H-, Alkali- oder Ammoniumion,
n = 0 bis 100,
m = 0 bis 50 und
n + m $\geq$ 1
ist, in Mengen von 0,1 bis 20 Gew.-%, bezogen auf Polyester, verwendet wird.

**Claim**

Process for preparing polyesters of improved dyeability by reacting dicarboxylic acids or reactive derivatives thereof with a mixture of diols comprising a predominant amount of an alkylene glycol and, by comparison, a

small amount of a polyoxyalkylene ether having two free hydroxyl groups on the starting alcohol, characterized in that the polyoxyalkylene ether used is a polyoxyalkylene ether of the formula

$R^1CH_2O\text{-}(C_2H_4O\text{-})_n(C_3H_6O\text{-})_mCH_2CHR^3CH_2\text{-}SO_3X$

where

$R^1$ = 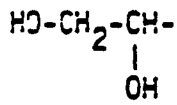 , 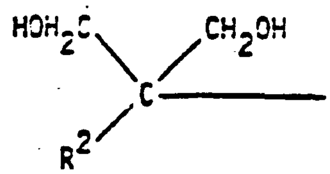 ,

$R^2 = CH_3\text{-}, C_2H_5\text{-}, C_3H_7\text{-}$,
$R^3$ = H- or $CH_3$-,
X = H-, alkali or ammonium ion,
n = 0 to 100,
m = 0 to 50 and
n + m > 1
in amounts of 0.1 to 20 % by weight, based on polyester.

**Revendication**

Procédé pour la préparation de polyesters présentant une aptitude améliorée à la teinture, par la réaction d'acides dicarboxyliques ou de leurs dérivés réactifs avec un mélange de diols constitué d'une quantité principale d'un alkylèneglycol et d'une quantité relativement plus faible d'un polyoxylkylènether possédant deux groupes hydroxyle libres sur l'alcool de départ, caractérisé en ce qu'on utilise comme polyoxyalkylènether un tel produit ayant la formule

$R^1CH_2O\text{-}(C_2H_4O\text{-})_n(C_3H_6O\text{-})_mCH_2CHR^3CH_2\text{-}SO_3X$

dans laquelle

$R^1$ = 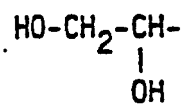 , 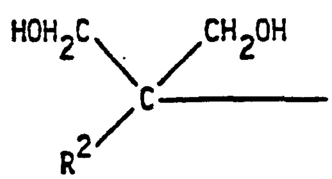 ,

$R^2 = CH_3\text{-}, C_2H_5\text{-}, C_3H_7\text{-}$,
$R^3$ = H- ou $CH_3$-,
X = H, un ion métal alcalin ou ammonium,
n = 0 à 100,
m = 0 à 50, et
n + m ≧ 1
en des quantités de 0,1 à 20 % en poids par rapport au polyester.

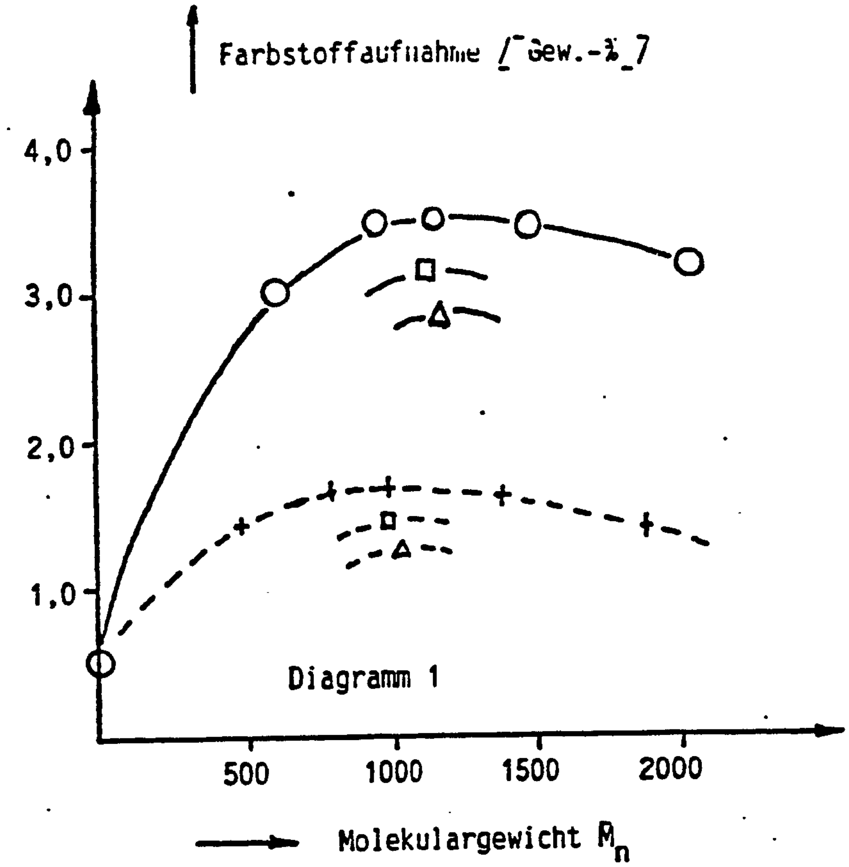
Farbstoffaufnahme /‾Gew.-%_7
4,0
3,0
2,0
1,0
Diagramm 1
500
1000
1500
2000
Molekulargewicht $\bar{M}_n$

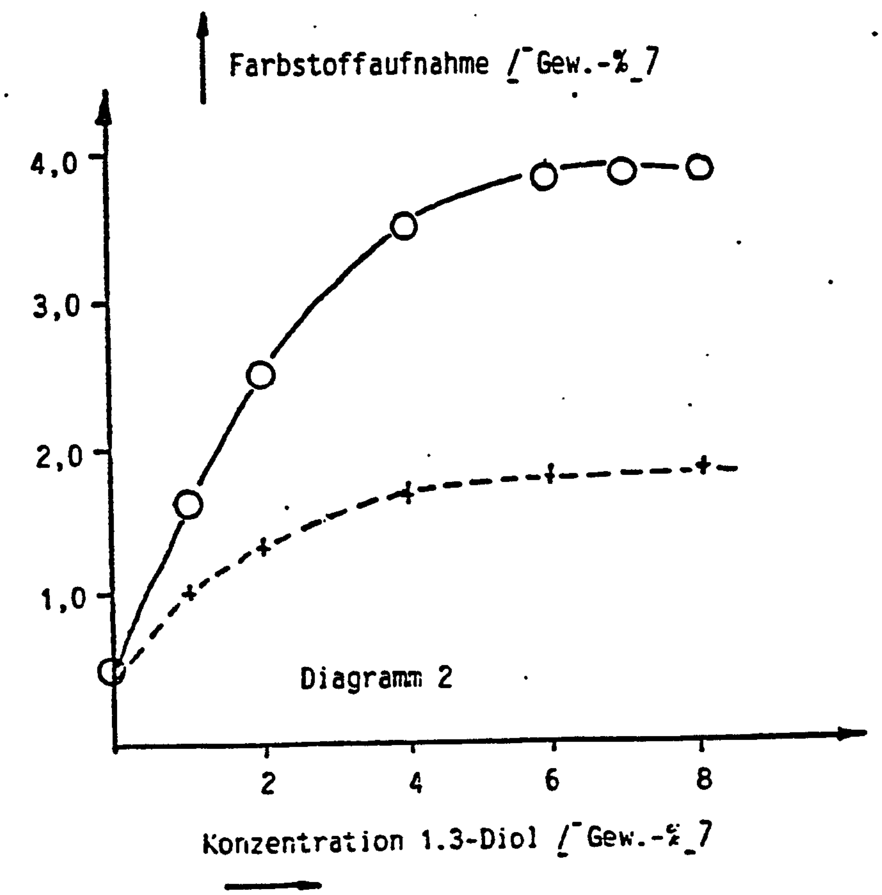
Farbstoffaufnahme /‾Gew.-%_7
4,0
3,0
2,0
1,0
Diagramm 2
2
4
6
8
Konzentration 1.3-Diol /‾Gew.-%_7